# EUROPÄISCHE PATENTSCHRIFT

(11) **EP 2 957 782 B1**
(45) Veröffentlichungstag und Bekanntmachung des Hinweises auf die Patenterteilung: **13.12.2017**
(21) Anmeldenummer: 15167455.3
(22) Anmeldetag: 13.05.2015
(51) Int. Cl.: F16C 29/06, F16C 43/04, F16C 29/08, F16C 33/60

(54) **FÜHRUNGSWAGEN MIT WÄLZKÖRPER-FÜHRUNGSABSCHNITT, DER DIE LAUFBAHNEINLAGE HINTERGREIFT**
GUIDE CARRIAGE WITH ROLLER BODY GUIDE SECTION WHICH ENGAGES THE PATH INSERT
CHARIOT DE GUIDAGE POUR UNE SECTION DE GUIDAGE D'UN CORPS ROULANT SAISISSANT L'ÉLÉMENT D'INSERTION DE CHEMIN DE ROULEMENT

(30) Priorität: 28.05.2014 DE 102014210173
(43) Veröffentlichungstag der Anmeldung: 23.12.2015
(73) Patentinhaber: ROBERT BOSCH GMBH, 70442 Stuttgart (DE)
(72) Erfinder: Spatschek, Gerd, 97638 Mellrichstadt (DE); Ziegler, Mario, 97241 Bergtheim (DE); Dorn, Stefan, 97450 Arnstein (DE); Schenk, Juergen, 97478 Knetzgau (DE); Korbacher, Michael, 97537 Wipfeld (DE); Stock, Marco, 97520 Roethlein (DE); Elting, Martina, 97422 Schweinfurt (DE); Schlegel, Peter, 91438 Bad Windsheim (DE)
(74) Vertreter: Maiß, Harald

(56) Entgegenhaltungen:
- EP-A2- 0 422 419
- DE-U1- 9 011 444
- US-A1- 2011 200 277
- US-A1- 2013 315 515
- US-B2- 7 950 853

## Beschreibung

Die Erfindung betrifft einen Führungswagen gemäß dem Oberbegriff von Anspruch 1.

Aus der DE 10 2007 057 834 A1 ist ein Führungswagen bekannt, welcher zur Verwendung mit einer langgestreckten Führungsschiene vorgesehen ist. Der Führungswagen umfasst vier Reihen von kugelförmigen Wälzkörpern, die jeweils in einem zugeordneten endlosen Umlaufkanal aufgenommen sind. Jeder Umlaufkanal umfasst einen Tragabschnitt und einen Rücklaufkanal, welche an beiden gegenüberliegenden Enden über je einen gebogenen Umlenkkanal miteinander verbunden sind. Der Tragabschnitt wird von einer Wagenlaufbahn an dem Führungswagen und einer Schienenlaufbahn an der Führungsschiene begrenzt, welche sich jeweils in eine Längsrichtung erstrecken. Alle Umlenkkanäle sind innerhalb zweier gesonderter Endkappen angeordnet, welche an den beiden gegenüberliegenden Längsstirnflächen des Hauptkörpers des Führungswagens befestigt sind. Der gesonderte Hauptkörper aus Metall, insbesondere aus Stahl, ist im Querschnitt betrachtet U-förmig ausgebildet. An den Innenseiten der entsprechenden U-Schenkel liegt je eine Laufbahneinlage an, welche aus gehärtetem Stahl besteht, wobei jeweils zwei Wagenlaufbahnen an einer Laufbahneinlage vorgesehen sind.

Um die Wälzkörper im Führungswagen zu halten, wenn dieser nicht auf der Führungsschiene montiert ist, ist ein Wälzkörperhaltesteg vorgesehen, welcher einstückig mit den Endkappen ausgebildet ist. Die lichte Weite zwischen dem Wälzkörperhaltesteg und dem Hauptkörper im Bereich der Schienenlaufbahn ist kleiner als der Durchmesser der Wälzkörper ausgeführt, so dass letztgenannte nicht durch den entsprechenden Spalt hindurchtreten können.

Aus der US 2011/0200277 A1 ist ein gattungsgemäßer Führungswagen bekannt.

Der Vorteil der vorliegenden Erfindung besteht darin, dass der Hauptkörper kostengünstiger hergestellt werden kann. Insbesondere vereinfacht sich die Schleifbearbeitung am Hauptkörper im Bereich der Laufbahneinlagen. Weiter hat der erfindungsgemäße Führungswagen weniger Einzelteile als der bekannte Führungswagen.

Gemäß dem selbständigen Anspruch wird vorgeschlagen, dass ein gesondertes Wälzkörperführungsteil vorgesehen ist, welches einen Führungsabschnitt aufweist, der sich in Längsrichtung erstreckt, wobei der Führungsabschnitt die Laufbahneinlage hintergreift. Der Spalt, der die Wälzkörper am Herausfallen aus dem Führungswagen hindert, wird also nicht mehr vom Hauptkörper begrenzt, sondern von dem genannten Führungsabschnitt. Vorzugsweise sind an dem Wälzkörperführungsteil radial innere Umlenkoberflächen des Umlenkkanals vorgesehen. Der Führungsabschnitt hat entlang der Längsrichtung vorzugsweise eine konstante Querschnittsform. Die Laufbahneinlage besteht vorzugsweise aus Metall, insbesondere aus gehärtetem Stahl. Die Laufbahneinlage liegt vorzugsweise unmittelbar am Hauptkörper an. Sie kann aber auch mit diesem verklebt sein.

In den abhängigen Ansprüchen sind vorteilhafte Weiterbildungen und Verbesserungen der Erfindung angegeben.

Es ist bevorzugt, dass der Führungsabschnitt eine erste Wälzkörperführungsfläche aufweist, welche den Umlaufkanal im Tragabschnitt begrenzt, wobei die erste Wälzkörperführungsfläche im Querschnitt betrachtet kreisförmig ausgebildet ist. Die kugelförmigen Wälzkörper können somit geräuscharm an der ersten Wälzkörperführungsfläche entlang laufen. Vorzugsweise besteht das Wälzkörperführungsteil aus Kunststoff. Vorzugsweise ist es im Spritzgussverfahren hergestellt.

Es ist bevorzugt, dass ein sich in Längsrichtung erstreckender Wälzkörperhaltesteg vorgesehen ist, welcher eine zweite Wälzkörperfiihrungsfläche aufweist, welche den Umlaufkanal im Tragabschnitt derart begrenzt, dass die Wagenlaufbahn zwischen der ersten und der zweiten Wälzkörperfiihrungsfläche angeordnet ist, wobei die zweite Wälzkörperfiihrungsfläche im Querschnitt betrachtet kreisförmig ausgebildet ist, wobei die lichte Weite zwischen der ersten und der zweiten Wälzkörperfiihrungsfläche im Bereich der Schienenlaufbahn kleiner als der Durchmesser der Wälzkörper ist. Hierdurch wird verhindert, dass die Wälzkörper aus dem Führungswagen herausfallen, wenn dieser nicht auf der Führungsschiene montiert ist. Der Wälzkörperhaltsteg ist vorzugsweise einstückig mit den Endkappen ausgebildet, wobei an jeder der beiden Endkappen jeweils ein Teil des Wälzkörperhaltestegs angeordnet sein kann.

Es ist vorgesehen, dass der Hauptkörper eine ebene Auflagefläche aufweist, an welcher der Führungsabschnitt anliegt, wobei sich die Laufbahneinlage zwischen die Wälzkörper im Tragabschnitt und die Auflagefläche erstreckt. Hierdurch wird der Hintergriff zwischen dem Führungsabschnitt und der Laufbahneinlage erreicht.

Es ist vorgesehen, dass an dem von der Laufbahneinlage abgewandten Ende der Auflagefläche ein Absatz an dem Hauptkörper angeordnet ist, wobei der Führungsabschnitt an dem Absatz anliegt. Der Absatz verhindert, dass der Hintergriff zwischen dem Führungsabschnitt und der Laufbahneinlage durch eine Verformung des Führungsabschnitts aufgehoben werden kann.

Es ist bevorzugt, dass an dem Führungsabschnitt eine Längsdichtlippe angeordnet ist, welche so angeordnet ist, dass sie die Führungsschiene berührt, wenn der Führungswagen auf dieser montiert ist. Hierdurch kann die an sich bekannte Längsdichtlippe besonders kostengünstig bereitgestellt werden. Die Längsdichtlippe ist vorzugsweise einstückig mit dem Führungsabschnitt ausgebildet. Das Wälzkörperführungsteil besteht vorzugsweise aus einem Elastomer, damit die Längsdichtlippe eine besonders gute Dichtwirkung aufweist.

Es ist bevorzugt, dass der Führungsabschnitt eine freie Oberfläche aufweist, welche von der Laufbahneinlage weg weist, wobei die freie Oberfläche absatzfrei in die Längsdichtlippe übergeht. Ein entsprechender Führungsabschnitt ist besonders Platz sparend, so dass der Hauptkörper im Bereich des Führungsabschnitts nicht unnötig geschwächt werden muss. Der Führungswagen besitzt dementsprechend eine hohe Steifigkeit.

Es ist vorgesehen, dass die Laufbahneinlage eine erste und eine zweite Wagenlaufbahn aufweist. Vorzugsweise ist zwischen der ersten und der zweiten Wagenlaufbahn eine erste Auflagefläche an der Laufbahneinlage angeordnet, wobei die Laufbahneinlage eine zweite Auflagefläche aufweist, welche gegenüberliegend zur ersten Auflagefläche angeordnet ist, wobei die Breite der zweiten Auflagefläche größer als die Breite der ersten Auflagefläche ist. Die breitere zweite Auflagefläche dient zum Auflegen der Laufbahneinlage in einer Schleifmaschine während der Bearbeitung der Schienenlaufbahnen, welche vorzugsweise geschliffen sind. Durch die vorgeschlagene Gestaltung der Laufbahneinlage können die Wälzkörperumläufe mit geringem Abstand zueinander angeordnet werden. In der Folge kann die zugeordnete Führungsschiene mit einer geringen Höhe ausgebildet werden, so dass Material eingespart wird. Die erste und/oder die zweite Auflagefläche sind vorzugsweise eben ausgebildet, wobei sie von einer Nut unterbrochen sein können.

Es ist bevorzugt, dass die Laufbahneinlage im Bereich der zweiten Auflagefläche eine Nut aufweist, welche sich in Längsrichtung über die gesamte Länge der Laufbahneinlage erstreckt. Über die genannte Nut wird die Laufbahneinlage während der Schleifbearbeitung der Wagenlaufbahnen gerade ausgerichtet.

Es ist vorgesehen, dass der Hauptkörper eine V-förmige Nut mit einer ersten und einer zweiten ebenen Seitenfläche aufweist, wobei die Laufbahneinlage an der ersten und der zweiten Seitenfläche anliegt, wobei die Wälzkörper im Tragabschnitt innerhalb der geraden Verlängerung der ersten und der zweiten Seitenfläche angeordnet sind. Die der Laufbahneinlage zugeordneten Wälzkörperumläufe können folglich mit geringem Abstand zueinander angeordnet werden, ohne dass ein Verkippen der Laufbahneinlage in der V-förmigen Nut zu befürchten ist. Der Grund der V-förmigen Nut ist vorzugsweise verrundet, wobei der Verrundungsdurchmesser im Wesentlichen gleich der Breite der zweiten Auflagefläche ist.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es stellt dar:
- Fig. 1: eine Explosionsansicht eines erfindungsgemäßen Führungswagens;
- Fig. 2: einen Querschnitt des Führungswagens nach Fig. 1 mit der zugeordneten Führungsschiene;
- Fig. 3: eine vergrößerte Teilansicht von Fig. 2 im Bereich einer Laufbahneinlage;
- Fig. 4: eine perspektivische Teilansicht des Wälzkörperführungsteils im Bereich der radial inneren Umlenkoberflächen.

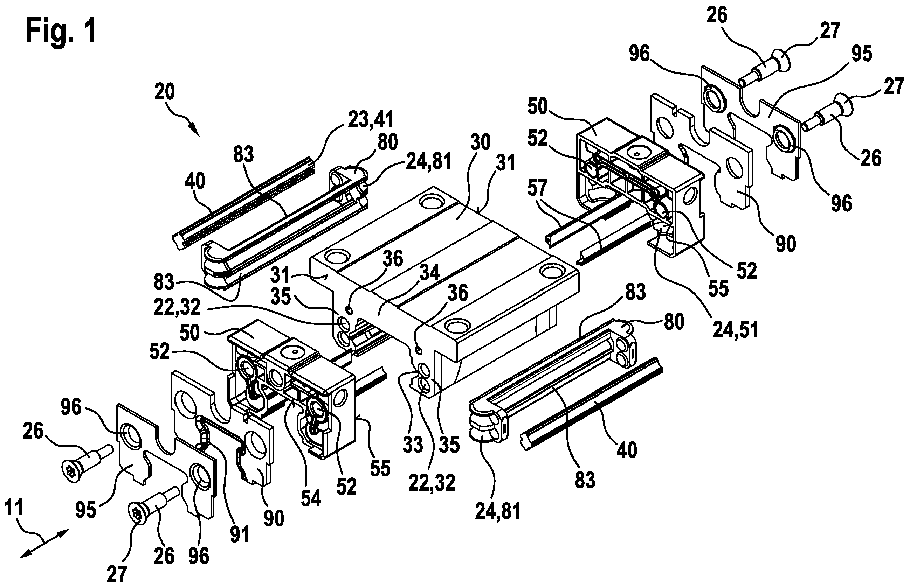

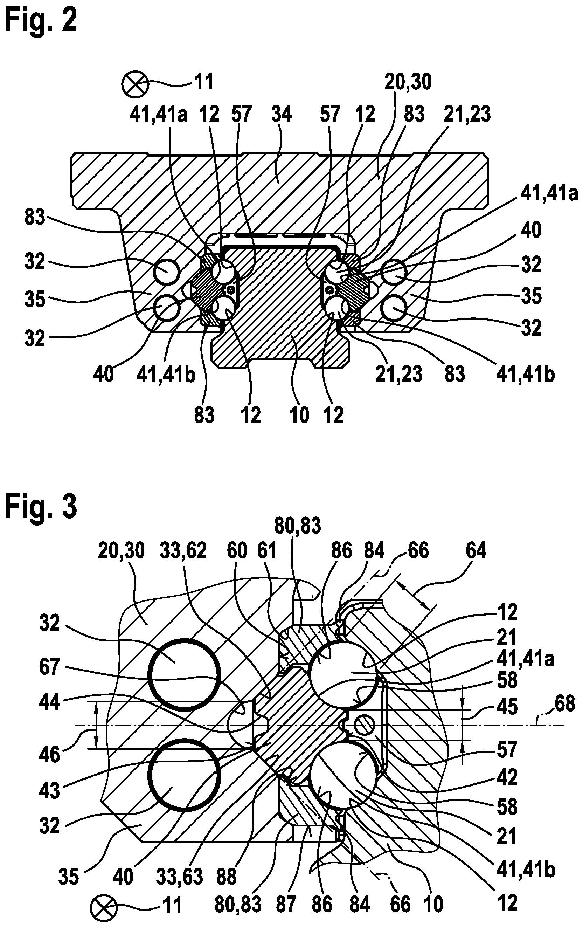

Fig. 1 zeigt eine Explosionsansicht eines erfindungsgemäßen Führungswagens 20. Der Führungswagen 20 umfasst einen Hauptkörper 30 aus ungehärtetem Stahl, der sich mit einer im Wesentlichen konstanten, U-förmigen Querschnittsform in eine Längsrichtung 11 erstreckt. An der Innenseite der U-Schenkel 35 ist jeweils eine V-förmige Nut 33 angeordnet, an der jeweils eine gesonderte Laufbahneinlage 40 anliegt, welche aus gehärtetem Wälzlagerstahl besteht. Die beiden Laufbahneinlagen 40 erstrecken sich mit einer im Wesentlichen konstanten Querschnittsform in Längsrichtung 11, wobei sie jeweils zwei Wagenlaufbahnen 41a; 41b aufweisen, so dass der Führungswagen 20 insgesamt vier Reihen von Wälzkörpern (Nr. 21 in Fig. 2) hat.

An den beiden gegenüberliegenden, ebenen Längsstirnflächen 31 des Hauptkörpers 30 liegt je eine Endkappe 50 mit einer inneren Längsstirnseite 55 unmittelbar an. Die beiden Endkappen 50 sind identisch ausgebildet, wobei sie aus Kunststoff im Spritzgussverfahren hergestellt sind. Für jede der vier Wälzkörperreihen ist in den beiden Endkappen 50 je eine radial äußere Umlenkoberfläche 51 eines gebogenen Umlenkkanals 24 vorgesehen. In die Endkappe 50 sind jeweils zwei zugeordnete Enden der beiden Wälzkörperführungsteile 80 eingesetzt, an denen die radial inneren Umlenkoberflächen 81 der gebogenen Umlenkkanäle 24 vorgesehen sind.

Zwischen den gebogenen Umlenkkanälen 24 in den gegenüberliegenden Endkappen 50 verläuft ein Rücklaufkanal 32, der vorliegend unmittelbar im Hauptkörper 30 in Form einer kreisrunden Bohrung ausgebildet ist, welche an ihren beiden Enden mit einer Kegelsenkung versehen ist. Die vorliegende Erfindung ist aber auch für Führungswägen verwendbar, bei denen der Rücklaufkanal in einem gesonderten Rücklaufrohr oder außen am Hauptkörper ausgebildet ist.

In den Endkappen 50 sind je zwei kreisrunde Befestigungsbohrungen 52 angeordnet, welche sich in Längsrichtung 11 erstrecken. Die Befestigungsbohrungen 52 werden jeweils von einer zugeordneten Befestigungsschraube 26 durchsetzt, welche endseitig ein Außengewinde aufweist, welches in ein zugeordnetes Innengewinde 36 im Hauptkörper 30 eingeschraubt ist. Das Innengewinde 36 ist in etwa im Bereich des Übergangs zwischen der Basis 34 und einem zugeordneten U-Schenkel 35 des Hauptkörpers 30 angeordnet, damit die beiden Befestigungsschrauben 26 die zugeordnete Endkappe 50 über die gesamte innere Längsstirnfläche 55 gleichmäßig an die Längsstirnfläche des Hauptkörpers 30 andrücken.

Auf der äußeren Längsstirnfläche 54 der Endkappe 50 liegt jeweils eine U-förmige Enddichtung 90 auf, welche im Wesentlichen als ebene Platte mit konstanter Dicke ausgebildet ist, wobei sie aus einem Elastomer, insbesondere thermoplastischem Ether Ester Elastomer (TEEE, Handelsname "Hytrel") besteht. Die Enddichtung 90 ist mit einer Enddichtlippe 91 versehen, welche dichtend an der Führungsschiene (Nr. 10 in Fig. 2) anliegt.

Außen auf der Enddichtung 90 liegt wiederum jeweils ein U-förmiges Abstreifblech 95 auf, welches in Form einer ebenen Platte mit konstanter Dicke ausgebildet ist, wobei es aus nichtrostendem Stahl besteht. Das Abstreifblech 95 ist mit geringem Abstand äquidistant zur Führungsschiene ausgebildet, so dass es Fremdkörper, beispielsweise Metallspäne, von dieser abstreifen kann. Die Befestigungsschrauben 26 durchsetzen sowohl das Abstreifblech 95 als auch die Enddichtung 90. Dabei liegt ein kegelförmiger Kopf 27 der Befestigungsschraube 26 an einer tiefgezogenen kegelförmigen Senkung 96 an dem Abstreifblech 95 an. Die Senkung 96 ist dabei so genau an den Kopf 27 angepasst, dass über den gesamten Umfang eine fluiddichte Berührung gegeben ist, damit dort kein Schmiermittel austritt. Der Kopf 27 der Befestigungsschraube 26 ist mit einem Torx-Profil zum Eingriff eines Schraubwerkzeugs versehen. Am Grund des Torx-Profils ist ein Innengewinde in der Befestigungsschraube 26 angeordnet, um beispielsweise einen Messkopf entsprechend der DE 10 2006 027 061 B4 am Führungswagen 20 zu befestigen.

Weiter ist noch auf die Wälzkörperhaltestege 57 hinzuweisen, welche einstückig an den Endkappen 50 ausgebildet sind, wobei sie sich zwischen die U-Schenkel 35 des Hauptkörpers 30 erstrecken. Die Wälzkörperhaltestege 57 der beiden Endkappen 50 erstrecken sich zusammen lückenlos über die gesamte Länge des Hauptkörpers 30.

Fig. 2 zeigt einen Querschnitt des Führungswagens 20 nach Fig. 1 mit der zugeordneten Führungsschiene 10. Die Schnittebene verläuft dabei senkrecht zur Längsrichtung 11 in der Mitte des Hauptkörpers 30.

Die Führungsschiene 10 besteht aus Stahl und ist im Bereich der Schienenlaufbahnen 12 randschichtgehärtet. Sie erstreckt sich mit der dargestellten konstanten Querschnittsform gerade entlang der Längsrichtung 11. An der Führungsschiene 10 sind insgesamt vier Schienenlaufbahnen 12 angeordnet, die zusammen mit den gegenüberliegenden Wagenlaufbahnen 41 den Tragabschnitt 23 des endlosen Umlaufkanals begrenzen. Die Schienen- und die Wagenlaufbahnen 12; 41 sind im Querschnitt betrachtet kreisförmig ausgebildet, wobei sie mit einer engen Schmiegung an die kugelförmigen Wälzkörper 21 angepasst sind. Weiter ist auf den Wälzkörperhaltesteg 57 hinzuweisen, der die Wälzkörper 21 zusammen mit den Führungsabschnitten 83 der Wälzkörperhalteteile im Führungswagen 20 hält, wenn sich dieser nicht auf der Führungsschiene 10 befindet.

Der vorliegende Führungswagen 20 hat vier Reihen von endlos umlaufenden Wälzkörpern 21, welche in einer sogenannten O-Anordnung belastet werden.

Fig. 3 zeigt eine vergrößerte Teilansicht von Fig. 2 im Bereich einer Laufbahneinlage 40. Zu erkennen ist insbesondere, wie die Führungsabschnitte 83 des Wälzkörperführungsteils 80 die Laufbahneinlage 40 hintergreifen.

Die Laufbahneinlage 40, die Führungsabschnitte 83, der Wälzkörperhaltesteg 57, die Rücklaufkanäle 32, die Schienenlaufbahnen 12 und die Wälzkörper 21 sind spiegelsymmetrisch bezüglich einer Symmetrieebene 68 angeordnet, welche parallel zur Längsrichtung 11 verläuft. An jedem U-Schenkel 35 des Hauptkörpers 30 sind je zwei ebene Auflageflächen 60 vorgesehen, die in einer Ebene verlaufen, welche senkrecht zur Symmetrieebene 68 angeordnet ist. Nach oben bzw. unten werden die Auflageflächen 60 durch einen Absatz 61 begrenzt, der im Eck verrundet ist, wobei er im Übrigen in der Art einer Einführschräge ausgebildet ist. An der Auflagefläche 60 und dem zugeordneten Absatz 61 liegt je ein Führungsabschnitt 83 an. Hierbei ist anzumerken, dass sich der Führungsabschnitt 83 mit der in Fig. 3 dargestellten konstanten Querschnittsform über die gesamte Länge des Hauptkörpers 30 erstreckt.

Gegenüberliegend zum Absatz 61 ist der Führungsabschnitt 83 mit einer Nase versehen, welche von einer ebenen Haltefläche 88 begrenzt wird, die parallel zu einer Seitenfläche der zugeordneten Seitenfläche 62; 63 der V-förmigen Nut 33 im Hauptkörper 30 angeordnet ist. Die Haltefläche 88 hintergreift die Laufbahneinlage 40, wobei sich letztgenannte zwischen die Wälzkörper 21 und Auflagefläche 60 erstreckt, so dass sie an der Haltefläche 88 anliegen kann.

Benachbart zur Haltefläche 88 ist der Führungsabschnitt 83 mit einer ersten Wälzkörperfiihrungsfläche 86 versehen, die im Querschnitt betrachtet kreisförmig ausgebildet ist, wobei der entsprechende Radius an die Wälzkörper 21 angepasst ist. Auf der anderen Seite der Wälzkörper 21 ist eine zweite Wälzkörperführungsfläche 58 angeordnet, die im Querschnitt betrachtet ebenfalls kreisförmig ausgebildet ist, wobei der entsprechende Radius an die Wälzkörper 21 angepasst ist. Zwischen der ersten und der zweiten Wälzkörperfiihrungsfläche 86; 58 ist eine zugeordnete Wagenlaufbahn 41 angeordnet, welche sich an der Laufbahneinlage 40 befindet. Auf der anderen Seite der Wälzkörper 21 ist ein Spalt zwischen der ersten und der zweiten Wälzkörperfiihrungsfläche 86; 58 vorgesehen, dessen Breite 64 kleiner als der Durchmesser der kugelförmigen Wälzkörper 21 ist. Damit wird verhindert, dass die Wälzkörper 21 aus den Führungswagen herausfallen, wenn sich dieser nicht auf der Führungsschiene 10 befindet. Andernfalls befindet sich die Schienenlaufbahn 12 im Bereich des genannten Spalts.

Auf der der Laufbahneinlage 40 abgewandten Seite ist der Führungsabschnitt 83 mit einer freien Oberfläche 87 versehen, welche nicht an dem Hauptkörper anliegt. Die freie Oberfläche 87 geht absatzfrei aber mit einem leichten Knick in eine Längsdichtlippe 84 über, welche einstückig an dem Führungsabschnitt 83 vorgesehen ist. Die Spitze der Längsdichtlippe 84 liegt an einer zugeordneten Seitenfläche der Führungsschiene 10 gleitend an.

Zwischen der ersten und der zweiten Wagenlaufbahn 41a; 41b ist die Laufbahneinlage mit einer ersten ebenen Auflagefläche 42 versehen, an welcher der Wälzkörperhaltesteg 57 anliegt. Die erste Auflagefläche 42 ist senkrecht zur Symmetrieebene 68 ausgerichtet, wobei sie in der Mitte mit einer Nut versehen ist, in welche der Wälzkörperhaltesteg 57 eingreift, so dass er relativ zur Laufbahneinlage genau ausgerichtet ist. Gegenüberliegend zur ersten Auflagefläche 42 ist eine ebene zweite Auflagefläche 43 an der Laufbahneinlage 40 vorgesehen, deren Breite 46 größer als die Breite 45 der ersten Auflagefläche 42 ausgebildet ist. Die Breite 45 der ersten Auflagefläche 42 wurde klein ausgeführt, damit der Abstand der beiden Wälzkörperreihen gering ist. Demgegenüber wurde die Breite 46 der zweiten Auflagefläche 43 groß ausgeführt, damit sie während der Schleifbearbeitung der Laufbahneinlage 40 als Auflagefläche dienen kann. Die zweite Auflagefläche 43 ist ebenfalls senkrecht zur Symmetrieebene 68 ausgerichtet, wobei in der Mitte eine Nut 44 angeordnet ist, mit der sie während der genannten Schleifbearbeitung gerade ausgerichtet werden kann.

Die Laufbahneinlage 40 liegt an einer V-förmigen Nut 33 im Hauptkörper unmittelbar an, wobei sie nur von der Vorspannkraft der Wälzkörper 21 gegen die Nut 33 gedrückt wird. Die V-förmige Nut 33 hat eine erste und eine zweite Seitenfläche 62; 63, welche einen Winkel von etwa 90° einschließen. Die tragenden Wälzkörper 21 sind vollständig innerhalb der Verlängerungen 66 der genannten Seitenflächen 62; 63 angeordnet. Zwischen der ersten und der zweiten Seitenfläche 62; 63 ist die V-förmige Nut 33 mit einer Verrundung 67 versehen, wobei der entsprechende Verrundungsdurchmesser in etwa gleich der Breite 46 der zweiten Auflagefläche 43 ausgeführt ist.

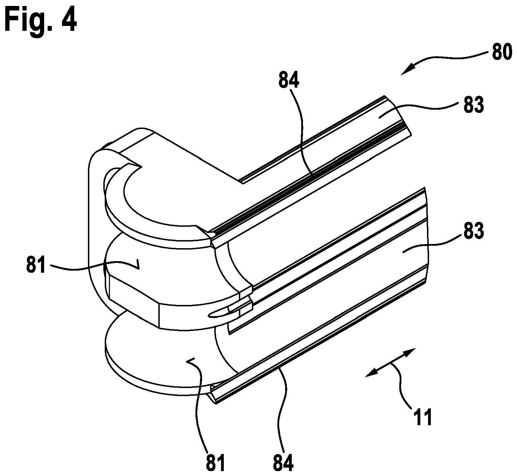

Fig. 4 zeigt eine perspektivische Teilansicht des Wälzkörperführungsteils 80 im Bereich der radial inneren Umlenkoberflächen 81. Einem Wälzkörperführungsteil 80 sind zwei parallel laufende Reihen von Wälzkörpern zugeordnet. Es weist daher an beiden Enden zwei radial innere Umlenkoberflächen 81 des Umlenkkanals auf, die bezüglich einer gemeinsamen Krümmungsachse mit dem gleichen Radius kreisförmig gebogen verlaufen.

Weiter sind an dem Wälzkörperführungsteil 80 zwei parallele Führungsabschnitte 83 einstückig vorgesehen, welche mit einer konstanten Querschnittsform in Längsrichtung 11 verlaufen. An den Führungsabschnitten 83 ist jeweils eine Längsdichtlippe 84 vorgesehen, welche dichtend an der Führungsschiene anliegt, wenn der Führungswagen auf dieser montiert ist. Weiter halten die Führungsabschnitte 83 die Wälzkörper im Führungswagen, wenn sich dieser nicht auf der Führungsschiene befindet.

Das Wälzkörperführungsteil 80 ist spiegelsymmetrisch bezüglich der in Fig. 3 mit der Nr. 68 gekennzeichneten Symmetrieebene ausgebildet. Darüber hinaus ist es spiegelsymmetrisch zu einer weiteren Symmetrieebene ausgebildet, die senkrecht zur Längsrichtung 11 verläuft. Das Wälzkörperfiihrungsteil 80 ist einstückig ausgebildet. wobei es aus einem Elastomer, vorzugsweise aus thermoplastischem Ether Ester Elastomer (TEEE, Handelsname "Hytrel") besteht.

### Bezugszeichenliste

- 10: Führungsschiene
- 11: Längsrichtung
- 12: Schienenlaufbahn

- 20: Führungswagen
- 21: Wälzkörper
- 22: Umlaufkanal
- 23: Tragabschnitt
- 24: Umlenkkanal
- 26: Befestigungsschraube
- 27: Kopf der Befestigungsschraube

- 30: Hauptkörper
- 31: Längsstirnfläche des Hauptkörpers
- 32: Rücklaufkanal
- 33: V-förmige Nut
- 34: Basis
- 35: U-Schenkel
- 36: Innengewinde

- 40: Laufbahneinlage
- 41: Wagenlaufbahn
- 41 a: erste Wagenlaufbahn
- 41b: zweite Wagenlaufbahn
- 42: erste Auflagefläche
- 43: zweite Auflagefläche
- 44: Nut
- 45: Breite der ersten Auflagefläche
- 46: Breite der zweiten Auflagefläche

- 50: Endkappe
- 51: radial äußere Umlenkoberfläche
- 52: Befestigungsbohrung
- 54: äußere Längsstirnfläche der Endkappe
- 55: innere Längsstirnfläche der Endkappe
- 57: Wälzkörperhaltesteg
- 58: zweite Wälzkörperführungsfläche

- 60: Auflagefläche
- 61: Absatz
- 62: erste Seitenfläche der V-förmigen Nut
- 63: zweite Seitenfläche der V-förmigen Nut
- 64: lichte Weite zwischen der ersten und der zweiten Wälzkörperführungsfläche
- 66: Verlängerung der ersten bzw. zweiten Seitenfläche
- 67: Verrundung
- 68: Symmetrieebene

- 80: Wälzkörperführungsteil
- 81: radial innere Umlenkoberfläche
- 83: Führungsabschnitt
- 84: Längsdichtlippe
- 86: erste Wälzkörperführungsfläche
- 87: freie Oberfläche des Führungsabschnitts und der Längsdichtlippe
- 88: Haltefläche

- 90: Enddichtung
- 91: Enddichtlippe

- 95: Abstreifblech
- 96: Senkung

## Patentansprüche

1. Führungswagen (20) zur Verwendung mit einer langgestreckten Führungsschiene (10), wobei der Führungswagen (20) wenigstens eine Reihe von kugelförmigen Wälzkörpern (21) aufweist, die in einem zugeordneten endlosen Umlaufkanal (22) aufgenommen sind, wobei der Umlaufkanal (22) einen Tragabschnitt (23) und einen Rücklaufkanal (32) aufweist, welche an ihren gegenüberliegenden Enden über je einen gebogenen Umlenkkanal (24) miteinander verbunden sind, wobei der Tragabschnitt (23) von einer sich in eine Längsrichtung (11) erstreckenden Wagenlaufbahn (41) am Führungswagen (20) und einer Schienenlaufbahn (12) an der Führungsschiene (10) begrenzt wird, wobei ein gesonderter Hauptkörper (20) vorgesehen ist, wobei die Wagenlaufbahn (41) an einer gesonderten Laufbahneinlage (40) angeordnet ist, welche an dem Hauptkörper (30) anliegt,wobei ein gesondertes Wälzkörperführungsteil (80) vorgesehen ist, welches einen Führungsabschnitt (83) aufweist, der sich in Längsrichtung (11) erstreckt, wobei der Führungsabschnitt (83) die Laufbahneinlage (40) hintergreift,
wobei der Hauptkörper (30) eine ebene Auflagefläche (60) aufweist, an welcher der Führungsabschnitt (83) anliegt,
wobei an dem von der Laufbahneinlage (40) abgewandten Ende der Auflagefläche (60) ein Absatz (61) an dem Hauptkörper (30) angeordnet ist, wobei der Führungsabschnitt (83) an dem Absatz (61) anliegt,
wobei die Laufbahneinlage (40) eine erste und eine zweite Wagenlaufbahn (41a; 41b) aufweist,
wobei der Hauptkörper (30) eine V-förmige Nut (33) mit einer ersten und einer zweiten ebenen Seitenfläche (62; 63) aufweist, wobei die Laufbahneinlage (40) an der ersten und der zweiten Seitenfläche (62; 63) anliegt, wobei die Wälzkörper (21) im Tragabschnitt (23) innerhalb der geraden Verlängerung (66) der ersten und der zweiten Seitenfläche (62; 63) angeordnet sind,
**dadurch gekennzeichnet, dass** der Hauptkörper aus Metall besteht, wobei der Führungsabschnitt (83) gegenüberliegend zum Absatz (61) mit einer Nase versehen ist, welche von einer ebenen Haltefläche (88) begrenzt wird, die parallel zu einer Seitenfläche der zugeordneten Seitenfläche (62; 63) der V-förmigen Nut (33) im Hauptkörper (30) angeordnet ist, wobei die Haltefläche (88) die Laufbahneinlage (40) hintergreift, wobei sich die Laufbahneinlage (40) derart zwischen die Wälzkörper (21) und Auflagefläche (60) erstreckt, dass sie an der Haltefläche (88) anliegen kann.

2. Führungswagen nach Anspruch 1,
**dadurch gekennzeichnet, dass** der Führungsabschnitt (83) eine erste Wälzkörperführungsfläche (86) aufweist, welche den Umlaufkanal (22) im Tragabschnitt (23) begrenzt, wobei die erste Wälzkörperführungsfläche (86) im Querschnitt betrachtet kreisförmig ausgebildet ist.

3. Führungswagen nach Anspruch 2,
**dadurch gekennzeichnet, dass** ein sich in Längsrichtung erstreckender Wälzkörperhaltesteg (57) vorgesehen ist, welcher eine zweite Wälzkörperführungsfläche (58) aufweist, welche den Umlaufkanal (22) im Tragabschnitt (23) derart begrenzt, dass die Wagenlaufbahn (41) zwischen der ersten und der zweiten Wälzkörperführungsfläche (86; 58) angeordnet ist, wobei die zweite Wälzkörperführungsfläche (58) im Querschnitt betrachtet kreisförmig ausgebildet ist, wobei die lichte Weite (64) zwischen der ersten und der zweiten Wälzkörperführungsfläche (86; 58) im Bereich der Schienenlaufbahn (12) kleiner als der Durchmesser der Wälzkörper (21) ist.

4. Führungswagen nach einem der vorstehenden Ansprüche,
, wobei zwischen der ersten und der zweiten Wagenlaufbahn (41a; 41b) eine erste Auflagefläche (42) an der Laufbahneinlage (40) angeordnet ist, wobei die Laufbahneinlage (40) eine zweite Auflagefläche (43) aufweist, welche gegenüberliegend zur ersten Auflagefläche (42) angeordnet ist, wobei die Breite (46) der zweiten Auflagefläche (43) größer als die Breite (45) der ersten Auflagefläche (42) ist.

5. Führungswagen nach einem der vorstehenden Ansprüche,
**dadurch gekennzeichnet, dass** die Laufbahneinlage (40) im Bereich der zweiten Auflagefläche (43) eine Nut (44) aufweist, welche sich in Längsrichtung (11) über die gesamte Länge der Laufbahneinlage (40) erstreckt.

6. Kombination aus Führungswagen nach einem der vorstehenden Ansprüche und einer Führungsschiene,
**dadurch gekennzeichnet, dass** an dem Führungsabschnitt (83) eine Längsdichtlippe (84) angeordnet ist, welche so angeordnet ist, dass sie die Führungsschiene (10) berührt, wenn der Führungswagen (20) auf dieser montiert ist.

7. Kombination nach Anspruch 6,
**dadurch gekennzeichnet, dass** der Führungsabschnitt (83) eine freie Oberfläche (87) aufweist, welche von der Laufbahneinlage (40) weg weist, wobei die freie Oberfläche (87) absatzfrei in die Längsdichtlippe (84) übergeht.

## Claims

1. Guide carriage (20) for use with an elongate guide rail (10), the guide carriage (20) having at least one row of spherical rolling bodies (21) which are received in an associated endless circulating channel (22), the circulating channel (22) having a load-bearing section (23) and a return channel (32) which are connected to one another at their opposite ends via in each case one curved deflecting channel (24), the load-bearing section (23) being delimited by a carriage raceway (41) which extends in the longitudinal direction (11) on the guide carriage (20) and a rail raceway (12) on the guide rail (10), a separate main body (20) being provided, the carriage raceway (41) being arranged on a separate raceway insert (40) which bears against the main body (30), a separate rolling body guide part (80) being provided which has a guide section (83) which extends in the longitudinal direction (11), the guide section (83) engaging behind the raceway insert (40),
the main body (30) having a planar bearing face (60), against which the guide section (83) bears, - a shoulder (61) being arranged on the main body (30) at that end of the bearing face (60) which faces away from the raceway insert (40), the guide section (83) bearing against the shoulder (61),
the raceway insert (40) having a first and a second carriage raceway (41a; 41b),
the main body (30) having a V-shaped groove (33) with a first and a second planar side face (62; 63), the raceway insert (40) bearing against the first and the second side face (62; 63), the rolling bodies (21) being arranged in the load-bearing section (23) within the straight extension (66) of the first and the second side face (62; 63),
**characterized in that** the main body consists of metal, the guide section (83) being provided with a lug in a manner which lies opposite the shoulder (61), which lug is delimited by a planar holding face (88) which is arranged parallel to a side face of the associated side face (62; 63) of the V-shaped groove (33) in the main body (30), the holding face (88) engaging behind the raceway insert (40), the raceway insert (40) extending between the rolling bodies (21) and the bearing face (60) in such a way that it can bear against the holding face (88).

2. Guide carriage according to Claim 1,
**characterized in that** the guide section (83) has a first rolling body guide face (86) which delimits the circulating channel (22) in the load-bearing section (23), the first rolling body guide face (86) being of circular configuration as viewed in cross section.

3. Guide carriage according to Claim 2,
**characterized in that** a rolling body holding web (57) which extends in the longitudinal direction is provided, which rolling body holding web (57) has a second rolling body guide face (58) which delimits the circulating channel (22) in the load-bearing section (23) in such a way that the carriage raceway (41) is arranged between the first and the second rolling body guide face (86; 58), the second rolling body guide face (58) being of circular configuration as viewed in cross section, the clear span (64) between the first and the second rolling body guide face (86; 58) in the region of the rail raceway (12) being smaller than the diameter of the rolling bodies (21).

4. Guide carriage according to one of the preceding claims,
a first bearing face (42) being arranged on the raceway insert (40) between the first and the second carriage raceway (41a; 41b), the raceway insert (40) having a second bearing face (43) which is arranged so as to lie opposite the first bearing face (42), the width (46) of the second bearing face (43) being greater than the width (45) of the first bearing face (42).

5. Guide carriage according to one of the preceding claims, **characterized in that** the raceway insert (40) has a groove (44) in the region of the second bearing face (43), which groove (44) extends in the longitudinal direction (11) over the entire length of the raceway insert (40).

6. Combination of a guide carriage according to one of the preceding claims and a guide rail,
**characterized in that** a longitudinal sealing lip (84) is arranged on the guide section (83), which longitudinal sealing lip (84) is arranged in such a way that it makes contact with the guide rail (10) when the guide carriage (20) is mounted on the latter.

7. Combination according to Claim 6,
**characterized in that** the guide section (83) has a free surface (87) which points away from the raceway insert (40), the free surface (87) merging without a step into the longitudinal sealing lip (84).

## Revendications

1. Chariot de guidage (20) destiné à être utilisé avec un rail de guidage allongé (10), le chariot de guidage (20) présentant au moins une rangée de corps de roulement en forme de billes (21) qui sont reçus dans un canal sans fin en circuit fermé associé (22), le canal en circuit sans fin (22) présentant une portion de support (23) et un canal de retour (32) qui sont raccordés l'un à l'autre à leurs extrémités opposées à chaque fois par le biais d'un canal de renvoi courbe (24), la portion de support (23) étant limitée par un chemin de roulement de chariot (41) s'étendant dans une direction longitudinale (11) sur le chariot de guidage (20) et par un chemin de roulement de rail (12) sur le rail de guidage (10), un corps principal (20) séparé étant prévu, le chemin de roulement de chariot (41) étant disposé au niveau d'un insert de chemin de roulement séparé (40) qui s'applique contre le corps principal (30), une partie de guidage de corps de roulement séparée (80) étant prévue, laquelle présente une portion de guidage (83) qui s'étend dans la direction longitudinale (11), la portion de guidage (83) venant en prise par l'arrière avec l'insert de chemin de roulement (40),
le corps principal (30) présentant une surface d'appui plane (60) contre laquelle s'applique la portion de guidage (83),
un épaulement (61) étant réalisé au niveau du corps principal (30) au niveau de l'extrémité de la surface d'appui (60) opposée à l'insert de chemin de roulement (40), la portion de guidage (83) s'appliquant contre l'épaulement (61), l'insert de chemin de roulement (40) présentant un premier et un second chemin de roulement de chariot (41a ; 41b),
le corps principal (30) présentant une rainure en forme de V (33) avec une première et une seconde surface latérale plane (62 ; 63), l'insert de chemin de roulement (40) s'appliquant contre la première et la deuxième surface latérale (62 ; 63), les corps de roulement (21) étant disposés dans la portion de support (23) à l'intérieur du prolongement droit (66) de la première de la deuxième surface latérale (62 ; 63), **caractérisé en ce que** le corps principal se compose de métal, la portion de guidage (83) à l'opposé de l'épaulement (61) étant pourvue d'un ergot qui est limité par une surface de retenue plane (88) qui est disposée parallèlement à une surface latérale de la surface latérale associée (62 ; 63) de la rainure en forme de V (33) dans le corps principal (30), la surface de retenue (88) venant en prise par l'arrière avec l'insert de chemin de roulement (40), l'insert de chemin de roulement (40) s'étendant entre les corps de roulement (21) et la surface d'appui (60) de telle sorte qu'il puisse s'appliquer contre la surface de retenue (88).

2. Chariot de guidage selon la revendication 1, **caractérisé en ce que** la portion de guidage (83) présente une première surface de guidage de corps de roulement (86) qui limite le canal en circuit fermé (22) dans la portion de support (23), la première surface de guidage de corps de roulement (86), vue en section transversale, étant réalisée sous forme circulaire.

3. Chariot de guidage selon la revendication 2, **caractérisé en ce qu'**une nervure de retenue de corps de roulement (57) s'étendant la direction longitudinale est prévue, laquelle présente une deuxième surface de guidage de corps de roulement (58) qui limite le canal en circuit fermé (22) dans la portion de support (23) de telle sorte que le chemin de roulement de chariot (41) soit disposé entre la première et la deuxième surface de guidage de corps de roulement (86 ; 58), la deuxième surface de guidage de corps de roulement (58) étant réalisée, vue en section transversale, sous forme circulaire , la largeur intérieure (64) entre la première et la deuxième surface de guidage de corps de roulement (86 ; 58) dans la région du chemin de roulement de rail (12) étant inférieure au diamètre des corps de roulement (21).

4. Chariot de guidage selon l'une quelconque des revendications précédentes,
dans lequel, entre le premier et le deuxième chemin de roulement de chariot (41a ; 41b), une première surface d'appui (42) est disposée au niveau de l'insert de chemin de roulement (40), l'insert de chemin de roulement (40) présentant une deuxième surface d'appui (43) qui est disposée à l'opposé de la première surface d'appui (42), la largeur (46) de la deuxième surface d'appui (43) étant supérieure à la largeur (45) de la première surface d'appui (42).

5. Chariot de guidage selon l'une quelconque des revendications précédentes,
**caractérisé en ce que** l'insert de chemin de roulement (40) présente, dans la région de la deuxième surface d'appui (43), une rainure (44) qui s'étend dans la direction longitudinale (11) sur toute la longueur de l'insert de chemin de roulement (40).

6. Combinaison d'un chariot de guidage selon l'une quelconque des revendications précédentes et d'un rail de guidage,
**caractérisée en ce qu'**une lèvre d'étanchéité longitudinale (84) est disposée au niveau de la portion de guidage (83), laquelle est disposée de manière à venir en contact avec le rail de guidage (10) lorsque le chariot de guidage (20) est monté sur celui-ci.

7. Combinaison selon la revendication 6,
**caractérisée en ce que** la portion de guidage (83) présente une surface libre (87) qui est tournée à l'opposé de l'insert de chemin de roulement (40), la surface libre (87) se prolongeant sans épaulement dans la lèvre d'étanchéité longitudinale (84).
